# DEMANDE DE BREVET EUROPEEN

(11) **EP 2 314 551 A1**
(43) Date de publication de la demande: **27.04.2011**
(21) Numéro de dépôt: 09174013.4
(22) Date de dépôt: 26.10.2009
(51) Int. Cl.: C03C 4/00, C03C 10/00, C03B 32/02

(54) **Verre silico-sodo-calcique demixe**

(71) Demandeur: AGC Glass Europe, 1170 Bruxelles (Watermael-Boitsfort) (BE); UNIVERSITE LIBRE DE BRUXELLES, 1050 Bruxelles (BE)
(72) Inventeur: La désignation de l'inventeur n'a pas encore été déposée
(74) Mandataire: Verbrugge, Vivien François Emeric

(57) **Abrégé**

L'invention concerne un verre ayant pour composants principaux SiO₂, Na₂O et CaO, qui comprend deux phases amorphes de compositions différentes, une des deux phases étant sous forme d'inclusions dispersées dans le volume de l'autre phase et comportant en outre des particules cristallines. Un tel verre possède une bonne résistance mécanique, en particulier une bonne résistance à la propagation des griffes, et permet une trempe améliorée. Ce verre présente, de plus, un aspect esthétique plaisant.

## Description

### 1. Domaine de l'invention

Le domaine de l'invention est celui des matériaux vitreux dans le système silico-sodo-calcique. Plus précisément, l'invention concerne un verre silico-sodo-calcique qui présente une bonne résistance mécanique, en particulier une bonne résistance à la propagation des griffes, et qui permet une trempe améliorée. Le verre selon l'invention présente ces propriétés couplées à un aspect esthétique plaisant.

### 2. Description de l'art antérieur

Le verre, dans sa définition la plus large, est un matériau amorphe, exempt d'ordre cristallin et isotrope. Lors de la fabrication d'un tel type de matériau amorphe comportant des constituants d'un composé cristallisable, un phénomène de cristallisation, appelé dévitrification, peut se produire. Lorsqu'une cristallisation se produit de façon accidentelle ou non contrôlée, elle entraîne la formation de cristaux relativement grossiers, de tailles très diverses et distribués de façon hétérogène dans la matrice vitreuse, souvent sous forme d'aiguilles en surface. La présence de tels cristaux conduit à un défaut optique (diminution de la transparence) et/ou mécanique (diminution de la résistance aux sollicitations mécaniques) du verre résultant.

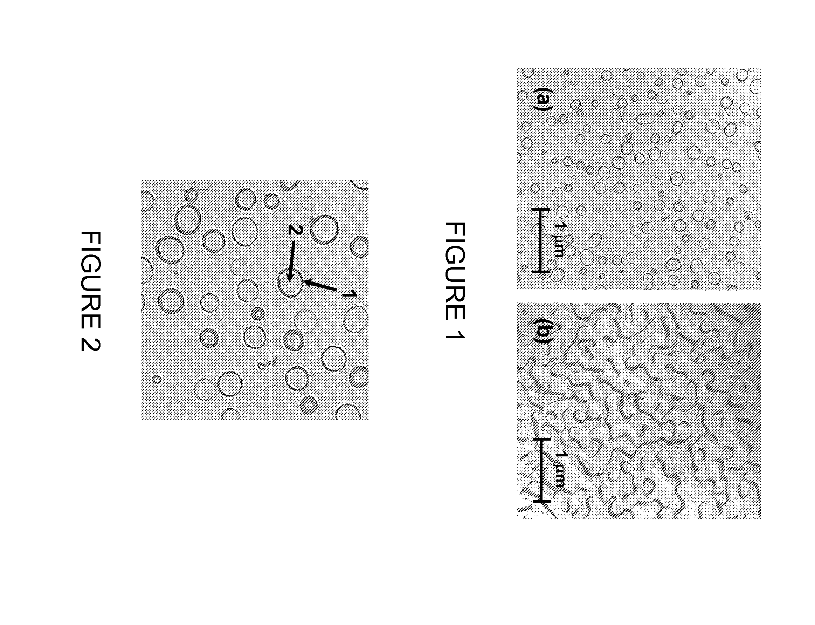

De plus, un autre phénomène indésirable peut également survenir lors de la fabrication d'un verre. Il s'agit de la séparation de phase liquide/liquide, ou démixtion, qui correspond à la croissance de phases amorphes de compositions différentes. Il est bien connu que, dans de nombreux silicates à l'état fondu, on peut observer deux phases liquides de compositions différentes, on parle alors d'immiscibilité. Les diagrammes de phase de nombreux liquides fondus montrent des domaines d'immiscibilité ou lacunes de miscibilité stables au dessus du liquidus: c'est le cas notamment des silicates alcalino-terreux, dans le cas des compositions riches en silice. Dans d'autres cas, cette immiscibilité est observée en dessous du liquidus (immiscibilité métastable), par exemple dans les silicates alcalins. Un verre homogène, chauffé à une température à laquelle la démixtion se produit, va donc se séparer en deux verres de compositions différentes. Ils existent deux types de démixtion engendrant des interfaces entre les phases amorphes qui ont des morphologies différentes. Ces deux types d'interfaces sont illustrées à la Figure 1 : (a) soit la séparation s'effectue par un mécanisme de germination/croissance et, dans ce cas, la séparation génère des inclusions isolées, appelées « gouttelettes » et qui sont dispersées dans une matrice vitreuse, (b) soit la séparation s'effectue par décomposition spinodale (séparation spontanée) et, dans ce cas, elle se traduit morphologiquement par l'apparition d'inclusions, souvent qualifiées de « vermiculites », générant une structure entrelacée avec une frontière plus diffuse entre les deux phases amorphes. La séparation de phase lorsqu'elle se produit de manière accidentelle dans un verre modifie la texture de ce verre et entraîne des hétérogénéités optiques et mécaniques indésirables. Le phénomène de démixtion dans le cas particulier d'un verre appartenant au système Na₂O-CaO-SiO₂ a été investiguée par Burnett et co. (Physics and Chemistry of Glasses, Vol.11 No.5 October 1970).

Durant des décennies, la composition du verre silico-sodo-calcique a d'ailleurs été optimisée afin de limiter ces phénomènes parasites de dévitrification et de séparation de phases et ainsi obtenir un matériau totalement amorphe, vitreux.

Néanmoins, malgré la propriété de transparence d'un verre inorganique, l'absence d'interfaces microstructurales mènent à une fragilité du matériau. Cette fragilité mécanique intrinsèque se traduit par des résistances faibles aux chocs mécaniques. En particulier, l'aspect esthétique du verre se trouve souvent fortement détérioré par la formation de griffes ou de rayures lors son utilisation et/ou de son transport. De plus, même si un verre est dur, il est fragile et peu tenace, c'est-à-dire qu'il n'est pas résistant à la propagation de griffes ou fissures suite à l'absence de discontinuités et de frontières de grains.

Egalement, un verre silico-sodo-calcique, qui est peu conducteur de la chaleur, enregistre une forte dilatation à l'endroit où il est chauffé. Le verre dilaté exerce une poussée sur les parties environnantes ce qui entraîne une rupture de l'objet en verre, c'est la « casse thermique ».

De nos jours, la « trempe » thermique du verre, très utilisée dans l'industrie du verre silico-sodo-calcique, permet l'amélioration de la résistance mécanique et thermique.

Malheureusement, ce traitement thermique, une fois effectué, ne permet pas la découpe ultérieure du produit s'il est sous forme de feuille, par exemple. Dans ce cas, il est important que l'usinage et la mise aux cotes définitives se fassent avant la trempe. Ce dernier point représente un inconvénient majeur pour les produits verriers nécessitant une résistance mécanique accrue, comme les carrelages ou les plans de travail, et qui demandent souvent une découpe pour le placement. De plus, la trempe d'un verre silico-sodo-calcique est délicate voire impossible pour le verre dit « mince », c'est-à-dire un verre sous forme de feuille d'une épaisseur environ inférieure à 2,5 mm. En effet, la contrainte en compression à la surface de l'ordre de 100 MPa induite par la trempe est impossible pour de telles feuilles de verres. Cette limitation provient de la valeur du coefficient d'expansion thermique ou CET du verre silico-sodo-calcique, de l'ordre de 90.10⁻⁷/°C. Il est effectivement bien connu, dans le monde des matériaux vitreux, que la trempe est facilitée lorsque le CET augmente. Une valeur plus élevée de CET pour le verre silico-sodo-calcique permettrait ainsi une trempe améliorée et donnerait, par exemple, accès des verres minces trempés.

Une voie connue afin d'améliorer la résistance mécanique d'un verre, et en particulier sa résistance à la propagation des griffes, est l'application d'une couche superficielle déposée sur le verre. Cette technique vise à bénéficier de la résistance mécanique spécifique de ladite couche vis-à-vis d'une sollicitation mécanique extérieure. Néanmoins, l'épaisseur de la couche protectrice est limitée et toute griffe macroscopique expose un verre non protégé au milieu extérieur ou mène à la création d'une amorce de fissure dans une zone du verre fragilisée. De plus, le dépôt d'une telle couche améliore uniquement la résistance à la griffe du verre et ne modifie en rien son coefficient d'expansion thermique.

Dans le domaine des matériaux vitreux, des verres comportant une phase vitreuse amorphe et une phase cristalline sont bien connus de la technique. Ces verres résultent de la dévitrification homogène contrôlée d'un verre. La transformation en céramique semi-cristalline, encore appelée matériau vitrocristallin ou communément vitrocéramique, s'obtient à partir d'un verre par un traitement thermique contrôlé qui permet de produire une grande densité de petits cristaux dispersés de façon homogène dans le volume du matériau. Contrairement à la dévitrification non contrôlée, cette distribution homogène des cristaux permet d'améliorer les propriétés mécaniques du produit. Certaines vitrocéramiques possèdent en effet une grande résistance à la griffe et à la rupture ainsi qu'une absence de dilatation à haute température, ce qui les rend pratiquement invulnérables aux chocs thermiques. En contrôlant, la proportion et la nature des différents cristaux, le CET de la vitrocéramique peut être ajusté et des valeurs très faibles sont souvent atteintes.

Sur base de ces propriétés, de nombreuses applications se sont développées pour de tels types de verre. La vitrocéramique est, par exemple, utilisée pour la fabrication de taques de cuisson ou de parois de cheminées.

Depuis des décennies et la percée des vitrocéramiques sur le marché dans le milieu des années cinquante, plusieurs compagnies ont développé des vitrocéramiques basées sur la cristallisation partielle d'un verre. Des compositions connues sont basées, par exemple, sur les systèmes Li₂O-SiO₂ (silicates) ou Li₂O-Al₂O₃-SiO₂ (aluminosilicates). Elles présentent en outre souvent un ou plusieurs agents nucléants tels que TiO₂, ZrO₂ ou P₂O₅. Par contre, l'état de la technique ne propose aucune vitrocéramique dans le système silico-sodo-calcique Na₂O-CaO-SiO₂. Il est d'ailleurs soutenu dans la littérature scientifique, et en particulier dans l'article de Strnad et co. publié dans Physics and Chemistry of Glasses (Vol.14 No.2 April 1973), qu'il est impossible de produire une cristallisation homogène dans le volume d'un verre appartenant à ce système et que seule une cristallisation hétérogène, non contrôlée, peut être obtenue dans ce cas.

Si beaucoup de matériaux vitrocristallins connus ont des propriétés de résistance mécanique et thermique de loin supérieures au verre silico-sodo-calcique amorphe, ils n'en demeurent pas moins beaucoup plus onéreux à produire et dès lors non transposables à des applications courantes pour des raisons économiques. Grâce à sa facilité de production et au faible prix de revient des matières premières, le verre silico-sodo-calcique garde en effet une place prépondérante dans l'industrie du verre et en particulier pour les marchés du bâtiment, de l'automobile et de la décoration.

Il existe dès lors un intérêt économique évident à produire un verre silico-sodo-calcique aux propriétés mécaniques accrues, en particulier une bonne résistance à la propagation des griffes, et qui permet une trempe améliorée.

D'autre part, des verres dits « opalins » comportant une phase vitreuse et une phase cristallines sont également bien connus de la technique et sont obtenus en introduisant un opacifiant, classiquement des fluorures, dans un silicate, un aluminosilicate ou un borosilicate, par une cristallisation intentionnelle ou contrôlée de cristaux (dans le cas de l'ajout de fluorures, les cristaux sont classiquement CaF₂ ou NaF). Les verres opalins, très présents dans la vie courante, sont opaques et diffusent la lumière. Ils sont donc principalement utilisés dans des applications de décoration et dans la fabrication de produits de consommation tels que des services de table ou des luminaires. Des verres opalins classiques, commercialisés sous la marque Arcopal®, sont blancs laiteux et sont des fluorosilicates. Néanmoins, l'introduction d'opacifiants classiques tels que des fluorures dans des compositions de verre présente deux inconvénients majeurs: (i) un impact négatif indéniable sur l'environnement et (ii) un phénomène de corrosion des matériaux réfractaires des fours de fusion qui est accentué.

Il y a dès lors également un intérêt à obtenir un verre silico-sodo-calcique présentant un aspect esthétique plaisant, comparables à celui des verres opalins mais qui est exempt de fluor.

### 3. Objectifs de l'invention

L'invention a notamment pour objectif de pallier aux inconvénients de l'art antérieur en résolvant le problème technique, à savoir obtenir un verre silico-sodo-calcique, c'est-à-dire appartenant au système Na₂O-CaO-SiO₂, aux propriétés mécaniques accrues, en particulier une bonne résistance à la propagation des griffes, et qui permet également une trempe améliorée.

Un autre objectif de l'invention est de fournir un verre silico-sodo-calcique possédant, en plus de la résistance mécanique recherchée et du fait qu'il permette une trempe améliorée, le caractère esthétique désiré en fonction de l'application auquel il se destine. L'invention se propose dans ce contexte de fournir un verre silico-sodo-calcique qui soit transparent ou alternativement, ayant une apparence opaque laiteuse plaisante, comparable à celle des verres opalins.

Finalement, un objectif de l'invention est de fournir une solution aux désavantages de l'art antérieur qui soit simple, économique et avec un faible impact environnemental.

### 4. Exposé de l'invention

Conformément à un mode de réalisation particulier, l'invention concerne un verre ayant pour composants principaux SiO₂, Na₂O et CaO et qui comprend deux phases amorphes de compositions différentes, une des deux phases étant sous forme d'inclusions dispersées dans le volume de l'autre phase.

Selon l'invention, lesdites inclusions comprennent en outre des particules cristallines.

Ainsi, le verre selon l'invention permet de solutionner les inconvénients des matériaux de l'art antérieur et de résoudre le problème technique posé. Les inventeurs ont en effet mis en évidence qu'il était possible, en générant un phénomène de démixtion couplé à une cristallisation à l'interface amorphe/amorphe et/ou dans le volume des inclusions créées par la démixtion d'obtenir un verre dans le système silico-sodo-calcique aux propriétés mécaniques accrues, en particulier une bonne résistance à la propagation des griffes, et qui possède une apparence acceptable voire plaisante esthétiquement. Ce résultat est surprenant dans la mesure où la transparence et l'homogénéité nécessaires dans les applications communes du verre silico-sodo-calcique (architecture, automobile, etc.) a toujours entraîné l'homme du métier à envisager uniquement des matériaux amorphes et l'a toujours poussé à optimiser la composition du verre ainsi que son procédé de fabrication afin d'éviter ou du moins limiter les phénomènes parasites de dévitrification et de séparation de phase.

De plus, les inventeurs ont mis en évidence, de façon très surprenante, qu'un verre silico-sodo-calcique présentant une démixtion couplée à une cristallisation permettait d'atteindre des valeurs de CET plus élevées qu'un verre totalement amorphe correspondant.

Le verre silico-sodo-calcique démixé selon l'invention possède ainsi une résistance mécanique accrue, en particulier une bonne résistance à la propagation des griffes, et il permet également une trempe améliorée. Ce verre est, de plus, économiquement et esthétiquement acceptable pour des applications courantes dans le bâtiment ou l'automobile.

L'invention concerne également une feuille constituée du verre tel que décrit précédemment ainsi qu'un article comprenant au moins une telle feuille.

La présente invention sera décrite plus en détails et de manière non-restrictive.
La figure 1 représente un cliché obtenu par microscopie électronique de verres démixés de l'état de la technique.
La figure 2 représente la position des particules cristallines conformément à l'invention.

### 5. Description d'un mode de réalisation de l'invention

Le verre selon l'invention est un verre silico-sodo-calcique, c'est-à-dire qui appartient au système Na₂O-CaO-SiO₂. Le verre de l'invention a dès lors pour composants principaux SiO₂, Na₂O et CaO. En particulier, le verre de l'invention comprend, en pourcentage en poids total, 60 à 85 % de SiO₂, 1 à 25 % de Na₂O et 1 à 25 % de CaO. Additionnellement, il peut comprendre d'autres composants en quantités mineures tels que K₂O, MgO, Al₂O₃, BaO, des colorants divers ou des résidus provenant d'additifs modifiant le redox (NaNO₃, Na₂SO₄, coke,...). De préférence, ces composants, s'ils sont présents dans le verre de l'invention, ne dépasseront pas au total 15 % en poids du verre.

Selon un mode de réalisation particulier de l'invention, le verre est exempt de l'élément fluor. Un tel verre silico-sodo-calcique possède dès lors un faible impact environnemental, en particulier comparé à des verres opalins dont l'opacifiant est classiquement à base d'un de ces composants. Le terme « exempt » signifie dans la présente invention que le verre ne comporte l'élément fluor qu'à l'état de trace. De préférence, le verre ne comporte l'élément fluor qu'en teneur inférieure à 500 ppm en poids.

Selon un autre mode de réalisation particulier de l'invention, le verre est également exempt de l'élément lithium. L'oxyde de lithium étant plus onéreux que des oxydes comme Na₂O et CaO, un tel verre de type silico-sodo-calcique représente dès lors un intérêt économique indéniable, en particulier comparé aux matériaux vitrocéramiques connus de l'état de la technique qui comprennent, le plus souvent, de l'oxyde de lithium. Exempt de l'élément lithium signifie que le verre de l'invention ne comporte cet élément qu'à l'état de trace. De préférence, le verre ne comporte l'élément lithium qu'en teneur inférieure à 500 ppm en poids.

Le verre selon l'invention comporte deux phases amorphes de compositions différentes, une des deux phases étant sous forme d'inclusions réparties dans le volume de l'autre phase, appelée phase matricielle.

Selon l'invention, le verre silico-sodo-calcique de l'invention comporte deux phases vitreuses de compositions différentes. En particulier, le verre de l'invention comporte une phase vitreuse sous forme d'inclusions qui est enrichie en SiO₂ et dispersée dans l'autre phase vitreuse matricielle qui est enrichie en éléments modificateurs de réseau, tels que le sodium et le calcium.

Conformément à un mode de réalisation particulier de l'invention, les inclusions sont sous forme de gouttelettes ou sous forme de vermiculites.

Selon l'invention, les inclusions comprennent en outre des particules cristallines.

Le verre de l'invention peut comprendre des particules cristallines sous forme d'un assemblage de plusieurs particules ou sous forme isolée.

Conformément à un mode de réalisation particulier, les particules cristallines ont une taille comprise entre 5 nm à 500 µm. De préférence, afin d'obtenir un verre qui soit transparent, les particules cristallines ont une taille comprise entre 5 nm à 500 nm. De préférence, afin d'obtenir un verre ayant une apparence opaque laiteuse, comparable à celle des verres opalins, les particules cristallines ont une taille comprise entre 500 nm à 500 µm.

Selon l'invention, les particules cristallines se trouvent :
(i) à la surface des inclusions, ou
(ii) dans le volume des inclusions, ou
(iii) à la fois à la surface et dans le volume des inclusions.

Par particule cristalline à la surface d'une inclusion, on entend une particule qui a cristallisé à l'interface amorphe/amorphe.

La position des particules cristallines est illustrée à la Figure 2 dans le cas d'une démixtion de type gouttelette:
(i) à la surface des inclusions (position 1), ou
(ii) dans le volume des inclusions (position 2), ou
(iii) à la fois à la surface et dans le volume des inclusions (position 1 et 2).

Avantageusement, la présence des particules cristallines à la surface des inclusions permet d'accroître davantage les propriétés mécaniques, en particulier la résistance à la propagation des fissures du verre. La présence des particules cristallines à la surface des inclusions permet également de limiter la cristallisation trop importante dans le volume des inclusions et ainsi éviter la croissance en volume desdites inclusions.

Selon un autre mode de réalisation particulier de l'invention, lorsque des particules cristallines se trouvent à la surface des inclusions, elles peuvent être constituées de composés qui peuvent cristalliser au départ de la composition globale du verre tels que le diopside (CaMgSi₂O₆), la dévitrite ou la wollastonite (CaSiO₃). De même, elles peuvent être constituées de composés ajoutés en faible quantité dans la composition globale du verre tels que BaO, TiO₂, ZrO₂, Nb₂O₅, ...

Selon encore un autre mode de réalisation particulier de l'invention, lorsque des particules cristallines se trouvent dans le volume des inclusions, elles sont constituées essentiellement de SiO₂. Des impuretés, telles que des composants provenant de la composition du verre et se retrouvant essentiellement dans la phase matricielle, peuvent y être présentes en quantité minimes. Si de telles impuretés sont présentes dans les particules cristallines, elles y sont de préférence en une quantité inférieure à 5 % en poids au total. De manière plus préférée, elles y sont en une quantité inférieure à 2 % en poids au total.

Selon ce mode de réalisation particulier, les particules cristallines de SiO₂ peuvent être sous forme d'un seul polymorphe de ce composant. Alternativement, les particules cristallines de SiO₂ peuvent être sous forme de plusieurs polymorphes de SiO₂. Le verre selon l'invention peut également comprendre à la fois des particules sous forme d'un seul polymorphe de SiO₂ et des particules sous forme de plusieurs polymorphes de SiO₂.

Des exemples de polymorphe de SiO₂ sont le quartz (α ou β), la cristobalite (α ou β) ou la tridymite (α ou β).

Selon un mode de réalisation particulier de l'invention, les particules cristallines de SiO₂ sont essentiellement sous forme de cristobalite.

Le verre selon l'invention possède une résistance mécanique accrue, en particulier une bonne résistance à la propagation des griffes, en comparaison avec un verre totalement amorphe correspondant.

La résistance mécanique d'un matériau est souvent exprimée en termes de dureté et de tenacité. La dureté caractérise l'aptitude d'un matériau à être griffé ou rayé (exprimé en MPa ou GPa). La tenacité est la capacité d'un matériau à résister à la propagation d'une fissure existante. La fragilité (B ou « brittleness ») peut venir compléter ces paramètres et correspond au rapport entre dureté (H) et tenacité (Kc), H/Kc (exprimée en µm^{-0.5}). Dans la présente invention, la dureté et la fragilité sont mesurées par indentation Vickers.

De préférence, le verre selon l'invention possède une fragilité inférieure à 6,5 µm⁻⁰⁵. A titre comparatif, cette valeur est de l'ordre de 7 µm^{-0.5} pour un verre silico-sodo-calcique totalement amorphe, sans traitement particulier.

De plus, le verre présente un CET plus élevé qu'un verre totalement amorphe correspondant.

Le réchauffement ou le refroidissement partiel d'un matériau peut, s'il possède une faible conductivité thermique, entraîner des contraintes pouvant provoquer des casses thermiques comme c'est le cas pour le verre silico-sodo-calcique totalement amorphe.

L'importance de ce phénomène de dilatation ou contraction d'un matériau respectivement lors du réchauffement ou du refroidissement partiel est classiquement défini par le coefficient d'expansion thermique linéaire. Ce coefficient d'expansion thermique ou CET correspond à l'allongement par unité de longueur pour une variation de 1°C (exprimé en °C ⁻¹).

De préférence, le verre selon l'invention présente un CET, mesuré pour une variation de température allant de 25 à 300°C, qui est supérieur 100.10⁻⁷/°C. A titre comparatif, le CET, pour le même domaine de températures d'un verre silico-sodo-calcique totalement amorphe, sans traitement particulier, est de l'ordre de 90.10⁻⁷/°C

Du fait de cette valeur de CET plus élevée, le verre de l'invention permet une trempe améliorée. On entend par verre qui permet une trempe améliorée, un verre qui nécessite, pour obtenir une contrainte en compression à la surface équivalente à celle d'un verre totalement amorphe correspondant, une trempe à une température plus faible et/ou pendant un temps plus court. Dès lors, cet avantage permet un gain d'énergie ce qui entraîne un effet positif supplémentaire de l'invention d'un point de vue environnemental et économique. De même, on entend également par verre qui permet une trempe améliorée, un verre qui présente, à traitement thermique équivalent, une contrainte en compression à la surface supérieure à celle d'un verre totalement amorphe correspondant. Finalement, on entend également par verre qui permet une trempe améliorée, un verre qui permet la trempe de feuilles « minces » faites de ce verre.

Le verre silico-sodo-calcique selon l'invention peut être obtenu par tout procédé capable de générer un phénomène de démixtion couplé à une cristallisation à l'interface amorphe/amorphe et/ou dans le volume des inclusions créées par la démixtion.

En particulier, le verre selon l'invention peut être obtenu par deux voies : (i) un traitement thermique contrôlé du verre à l'état fondu (céramisation), ou (ii) une recuisson contrôlée d'un verre de même composition globale mais solidifié au préalable à l'état totalement amorphe.

Dans les deux cas, un traitement thermique appelé céramisation est opéré. La céramisation comprend généralement, de manière connue, les étapes suivantes, qui peuvent être répétées plusieurs fois :
a) élévation de la température jusqu'à la température T (palier de céramisation) qui est située au-delà de l'intervalle de nucléation ;
b) maintien de la température T pendant un temps t ;
c) refroidissement rapide jusqu'à la température ambiante.

Le verre selon l'invention peut être utilisé pour fabriquer des articles de formes et de tailles différentes. Il peut, par exemple, être utilisé pour fabriquer des flacons, des globes pour luminaires et des objets de décoration.

En particulier, le verre de l'invention peut être utilisé pour fabriquer une feuille dudit verre. Conformément à ce mode de réalisation, et du fait de sa résistance accrue à la propagation des griffes, il peut, par exemple, être utilisé pour un plan de travail dans une cuisine ou un laboratoire, pour des tables et étagères ou en tant que revêtement de sol (dallage, passerelle). Toujours conformément à ce mode de réalisation, et du fait que le verre permet également une trempe améliorée, il peut également être utilisé pour fabriquer des panneaux solaires ou des vitrages automobiles.

Un exemple d'article conforme à l'invention comportant plus d'une feuille dudit verre est une paroi murale qui est « feuilletée » pour améliorer l'aspect sécurité, c'est-à-dire qui comprend deux feuilles assemblées par un ou plusieurs films d'intercalaire plastique.

## Revendications

1. Verre ayant pour composants principaux SiO₂, Na₂O et CaO, qui comprend deux phases amorphes de compositions différentes, une des deux phases étant sous forme d'inclusions dispersées dans le volume de l'autre phase, **caractérisé en ce que** lesdites inclusions comprennent en outre des particules cristallines.

2. Verre selon la revendication précédente, **caractérisé en ce qu'**il comprend, en pourcentage en poids total, 60 à 85 % de SiO₂, 1 à 25 % de Na₂O et 1 à 25 % de CaO.

3. Verre selon l'une des revendications précédentes, **caractérisé en ce que** les inclusions sont sous forme de gouttelettes ou de vermiculites.

4. Verre selon l'une des revendications précédentes, **caractérisé en ce que** les particules cristallines sont à la surface des inclusions et/ou dans le volume des inclusions.

5. Verre selon la revendication précédente, **caractérisé en ce que** les particules cristallines dans le volume des inclusions sont constituées essentiellement de SiO₂.

6. Verre selon la revendication précédente, **caractérisé en ce que** les particules cristallines sont sous forme d'un ou plusieurs polymorphes de SiO₂.

7. Verre selon l'une des revendications 1 à 6, **caractérisé en ce que** les particules cristallines ont une taille comprise entre 5 nm à 500 µm.

8. Verre selon la revendication précédente, **caractérisé en ce que** les particules cristallines ont une taille comprise entre 5 nm à 500 nm.

9. Verre selon la revendication 7, **caractérisé en ce que** les particules cristallines ont une taille comprise entre 500 nm à 500 µm.

10. Verre selon l'une des revendications précédentes, **caractérisé en ce qu'**il possède une fragilité, mesurée par indentation Vickers, inférieure à 6,5 µm^{-0.5}.

11. Verre selon l'une des revendications précédentes, **caractérisé en ce qu'**il possède un CET, mesuré pour une variation de température allant de 25 à 300°C, qui est supérieur 100.10⁻⁷/°C.

12. Verre selon l'une des revendications précédentes, **caractérisé en ce qu'**il est exempt de l'élément fluor.

13. Verre selon l'une des revendications précédentes, **caractérisé en ce qu'**il est exempt de l'élément lithium.

14. Feuille **caractérisée en ce qu'**elle est constituée du verre de l'un des revendications 1 à 14.

15. Article **caractérisé en ce qu'**il comporte au moins une feuille selon la revendication précédente.
